# EUROPÄISCHE PATENTSCHRIFT

(11) **EP 1 833 144 B1**
(45) Veröffentlichungstag und Bekanntmachung des Hinweises auf die Patenterteilung: **25.03.2009**
(21) Anmeldenummer: 07107186.4
(22) Anmeldetag: 09.01.2003
(51) Int. Cl.: H02K 9/14, A47L 5/22, H02K 9/06

(54) **Schnelllaufender Elektromotor**
Rapidly-running electric motor
Moteur électrique à régime élevé

(30) Priorität: 12.01.2002 DE 10200913
(43) Veröffentlichungstag der Anmeldung: 12.09.2007
(62) Teilanmeldung aus: 03704366.8
(73) Patentinhaber: Vorwerk & Co. Interholding GmbH, 42275 Wuppertal (DE)
(72) Erfinder: Arnold, Hans-Peter, 58566 Kierspe (DE); Varnhorst, Mathias, 42349 Wuppertal (DE); Ullrich, Gerhard, 44287 Dortmund (DE); Röllinghoff, Dirk, 58091 Hagen (DE); Schmitz, Volker, 42655 Solingen (DE); Ehring, Ingo, 46238 Bottrop (DE)
(74) Vertreter: Müller, Enno

(56) Entgegenhaltungen:
- DE-A- 19 606 146
- US-A- 2 973 895
- US-A- 3 311 290
- US-A- 4 111 615
- US-A- 4 733 429
- US-A- 6 094 774

## Beschreibung

Die Erfindung betrifft zunächst einen schnelllaufenden Elektromotor nach den Merkmalen des Oberbegriffes des Anspruchs 1.

Derartige schnelllaufende Elektromotoren sind bekannt und finden bspw. in Staubsaugern Verwendung, wobei die Kühlluft teilweise das Motorgehäuse durchsetzend, durch die Zwischenräume zwischen Rotor und Stator strömend geführt und teilweise außerhalb des Motorgehäuses entlang geführt wird. Diesbezüglich ist weiter bekannt, das Motorgehäuse durch ein radial beabstandetes Motoraußengehäuse zu umschließen. So zeigt die US 4,111,615 einen derartigen Elektromotor, der einen Ventilator aufweist, wobei ein Rotor und Stator aufnehmendes Motorgehäuse in einem Motoraußengehäuse angeordnet ist. Elektromotor und Motoraußengehäuse sind über einen, den Ventilator überdeckenden Gebläsetopf miteinander verbunden.

Im Hinblick auf den zuvor beschriebenen Stand der Technik wird eine technische Problematik der Erfindung darin gesehen, für einen schnelllaufenden Elektromotor der in Rede stehenden Art, dessen Kühlluftstrom zum größten Teil außen zwischen Motorgehäuse und Motoraußengehäuse geführt wird, eine platzsparende Schalldämpfung anzubieten.

Diese Problematik ist beim Gegenstand des Anspruches 1 gelöst, wobei vorgeschlagen wird, dass das Schaumstoffteil als geschlossener Ring ausgebildet ist, der gegenüberliegende, vertikal verlaufende Stege aufweist. Bevorzugt besteht das Schalldämpfungselement aus einem quaderförmigen, luftdurchlässigen und elastischen Schaumstoffkörper mit einem in Längsrichtung verlaufenden Einschnitt. Dieser Grundkörper ist zur Montage zu einem ringförmigen Element deformiert und über das Motorgehäuse gestülpt, so dass das Schaumstoffteil auf dem zylindrischen Motorgehäuse unter der Materialvorspannung festsitzt. Alternativ zum gewählten Schaumstoff kann auch ein Vlies als schalldämmendes Element eingesetzt sein. Die Anordnung ist weiter so gewählt, dass das Schaumstoffteil im Bereich der Stege mit radialem Abstand zum Motorgehäuse verläuft. Weiter sind die Abmessungen des Schaumstoffteiles so gewählt, dass die Stege durch die elastische Vorspannung radial nach Außen gegen die Innenwandung des den Elektromotor kapselnden Motoraußengehäuses treten, wobei das Schaumstoffteil außerhalb der Stegbereiche mit radialem Abstand zum Motoraußengehäuse verläuft. Zufolge dieser Ausgestaltung ergibt sich eine Zweikammer-Strömung, deren dominante Komponente achsparallel ist. Die Stege des Schaumstoffteiles werden erfindungsgemäß umfangsmäßig in Überdeckung zu Brückenstegen einer Lagerbrücke angeordnet. Die drallbehaftete Luft, die aus dem Ringspalt des Gebläses entweicht, wird durch die Stege des Schaumstoffteiles zum größten Teil in Achsrichtung umgelenkt. Da das Schalldämpfungsmaterial luftdurchlässig ist, entstehen auf den strömungsabgewandten Seiten der Schaumstoffteilstege keine strömungstechnischen Toträume, die den Strömungsverlust ansonsten negativ beeinflussen würden. Auch ist vorgesehen, dass von der Lagerbrücke in Axialrichtung abstehende Schaufelelemente ausgehen, welche dem darauf aufliegenden Schaumstoffteil einen Axialabstand zu einem Diffusorteil des Motors vorgeben. Somit ist ein Mindestabstand des schalldämpfenden Schaumstoffteiles von der bevorzugt ringförmigen Gebläseaustrittsöffnung in der Größenordnung der Ringspalthöhe gewährleistet. Durch die erfindungsgemäße Anordnung des Schaumstoffteiles wird erreicht, dass der aus dem ringförmigen Spalt am Gebläse austretende Schall nicht direkt durchstrahlen kann, da das Schaumstoffteil eine Barriere bildet, d. h. der Schall wird unter anderem reflektiert, was sich hinsichtlich der Geräuschreduktion als besonders effektiv erweist. Weitere Geräuschanteile, die an der Stirnfläche nicht reflektiert werden, können im Material gedämpft werden. Die durch den engen Spalt zwischen Schaumstoffteil und umschließendem Motoraußengehäuse strömende Luft wird hochwirksam an der Mantelfläche des Schaumstoffteiles bedämpft. Die Kühlung des Elektromotors wird nicht beeinträchtigt, da das Schaumstoffteil luftdurchlässig ist und damit ein konvektiver Wärmeaustausch der durch das Schaumstoffteil bedeckten Motorflächen gewährleistet ist. Der Aufbau ist platzsparend, so dass ein Motoraußengehäuse Verwendung finden kann, dessen Durchmesser kleiner als der Gebläsetopfdurchmesser gewählt sein und das eine geradlinige, Bauraum sparende Luftführung erlaubt.

Der Gebläsetopf ist mit dem Motoraußengehäuse verbunden und der Gebläsetopf und das Motoraußengehäuse sind fest an den Elektromotor angeordnet. Es ist so in einfachster Weise eine Motorkapselung zur Bildung eines äußeren Kühlluft-Stromweges realisierbar. Der ohnehin zur Abdeckung des Ventilators und gegebenenfalls eines angeordneten Diffusors vorgesehene Gebläsetopf ist genutzt. Mit diesem wird das, das den Stator und den Rotor aufnehmende Motorgehäuse ummantelnde Motoraußengehäuse verbunden, so dass durch den Gebläsetopf und das Motoraußengehäuse eine, bis auf eine Lufteintrittsöffnung im Bereich des Gebläsetopfes und eine Luftauslassöffnung im gegenüberliegenden Bereich des Motoraußengehäuses vollständige Kapselung des Elektromotors gegeben ist. Durch die gewählte Verbindung sind der Gebläsetopf und das Motoraußengehäuse fest an dem Elektromotor angeordnet, so dass relative Motorenbewegungen in der so gebildeten Kapsel vermieden werden. So ist hierdurch in vorteilhafter Weise eine direkte Elektrokontaktierung des Elektromotors durch das Motoraußengehäuse ermöglicht. Hinsichtlich der Verbindung von Gebläsetopf und Motoraußengehäuse wird bevorzugt, dass diese gegeneinander formschlussgesichert sind. So wird weiter vorgeschlagen, dass der Gebläsetopf und das Motoraußengehäuse plastisch verformbar sind und dass die Verbindung der Teile untereinander durch plastische Verformung eines der Teile erreicht ist. Bspw. können hierbei der Gebläsetopf und/oder das Motoraußengehäuse im Kunststoff-Spritzverfahren hergestellt sein. Bevorzugt wird eine Ausgestaltung, bei welcher lediglich das Motoraußengehäuse aus einem Kunststoffmaterial besteht, der Gebläsetopf hingegen als Blechteil gebildet ist, wobei zur Erzielung der Formschlussverbindung bspw. eine partielle Deformierung des mit dem Motoraußengehäuse zusammenwirkenden Bereiches des Gebläsetopfes durchgeführt wird. Als besonders vorteilhaft erweist sich hierbei, dass die Teile in einem Umfangs-Verbindungsbereich einander übergreifen und dass das übergreifende Teil im Hintergriffabschnitt zu dem übergriffenen Teil plastisch verformt ist. Bevorzugt übergreift hierbei ein Kragen des Gebläsetopfes einen Hintergriffabschnitt des Motoraußengehäuses, wobei eine Deformation des Umgriffes um den Hintergriffabschnitt des Motoraußengehäuses durch Rollen oder partielles Crimpen des übergreifenden Gebläsetopfkragens erreicht wird. Diese Verbindung ist nicht zerstörungsfrei trennbar. Insbesondere bei Einsatz eines Elektromotors der in Rede stehenden Art in einem Staubsauger ist es aus hygienischen Gründen erwünscht, dass auch der außenseitig um das Motorgehäuse geführte, unter Umständen feinste Staubpartikel mit sich führende Luftstrom vollständig und gezielt gerichtet das Motoraußengehäuse durch eine vorgesehene Abluftöffnung verlässt. So ist vorgesehen, dass in dem Verbindungsbereich der Teile eine umlaufende Weich-Dichtlippe ausgeformt ist, wobei weiter bevorzugt wird, dass die Dichtlippe an eines der Teile, bevorzugt an das im Kunststoff-Spritzverfahren hergestellte Motoraußengehäuse angespritzt ist. Zufolge dieser Weiterbildung ist eine hygienedichte Kapselung des Elektromotors ermöglicht. Es ist somit eine dauerhafte luftdichte, temperaturfeste und mechanisch belastbare Verbindung des Motoraußengehäuses zum Motorchassis garantiert. Als besonders vorteilhaft erweist sich hierbei, dass das hintergriffene Teil mit einem, gegebenenfalls durch die Dichtlippe gebildeten Verbindungsrand auf einer Anlagestufe des umgreifenden Teils aufliegt. Bevorzugt besitzt hierbei das Dichtelement an der Stirnseite eine spitze Ausprägung, die gegen die Anlagestufe des umgreifenden Teils, vorzugsweise des Gebläsetopfes, luftdicht verpresst wird. Durch die formschlüssige Verbindung von Gebläsetopf und Motoraußengehäuse ist eine Rückfederung der Dichtungsspannung verhindert. In einer Weiterbildung des Erfindungsgegenstandes ist vorgesehen, dass der Gebläsetopf axial auf einem Diffusor abgestützt ist. Hieraus ergibt sich, insbesondere im Zusammenhang mit einer weiteren erfindungsgemäßen Ausgestaltung, bei welcher das Motoraußengehäuse an einer Lagerbrücke abgestützt ist, nach Erstellung der Formschlussverbindung eine Einspannung des Motorchassis. Die Lagerbrücke ist hierbei in üblicher Weise zwischen dem, den Stator und den Rotor aufnehmenden Motorgehäuse und dem Ventilator und den Letzteren radial umgreifenden Diffusor positioniert. Als besonders vorteilhaft erweist sich diesbezüglich weiter, dass die Abstützung des Motoraußengehäuses an der Lagerbrücke im Verbindungsbereich von Gebläsetopf und Motoraußengehäuse vorgenommen ist. Demnach können die bei der Deformation des Gebläsetopfkragens zur Erzielung der Formschlussverbindung hervorgerufenen Radialkräfte im Inneren von der Lagerbrücke aufgenommen werden.

Nachstehend ist die Erfindung anhand der beigefügten Zeichnungen, welche lediglich ein Ausführungsbeispiel darstellen, näher erläutert. Es zeigt:
- Fig. 1: in perspektivischer Darstellung eine Motor-Gebläse-Einheit mit einem nicht näher dargestellten Elektromotor, einem Gebläsetopf und einem mit diesem Gebläsetopf verbundenen Motoraußengehäuse;
- Fig. 2: eine perspektivische Explosionsdarstellung des Motoraußengehäuses und des diesem zuordbaren, mit dem Gebläsetopf versehenen Elektromotors und einem Schalldämpfungselement;

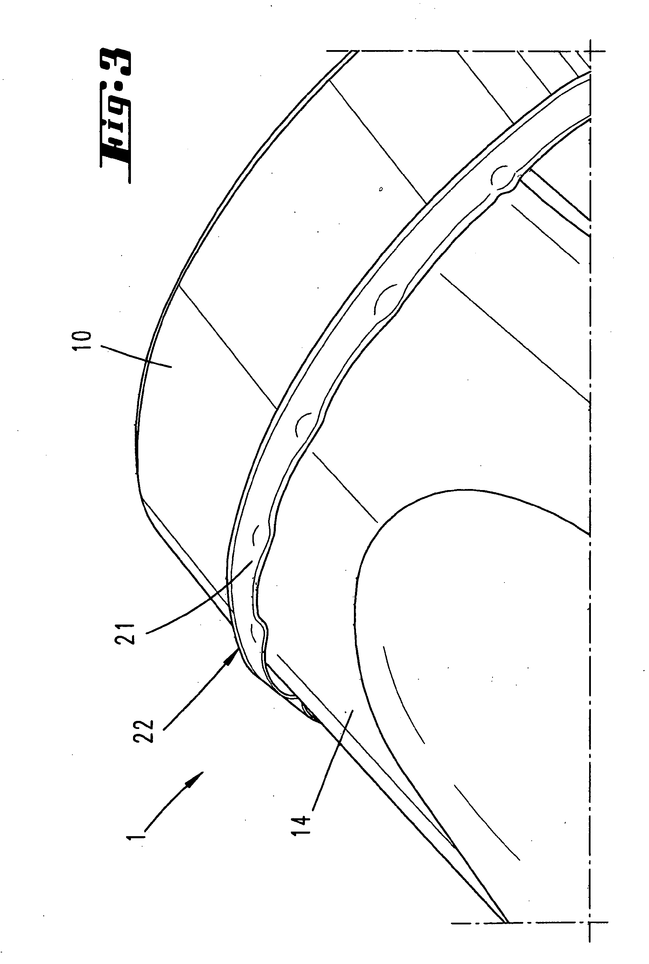

- Fig. 3: die Herausvergrößerung des Bereiches III in Fig. 1;
- Fig. 4: einen versetzt verlaufenden Längsschnitt durch die Motor-Gebläse-Einheit;
- Fig. 5: den Schnitt gemäß der Linie V-V in Fig. 4;
- Fig. 6: die Herausvergrößerung des Bereiches VI in Fig. 4;
- Fig. 7: das Motoraußengehäuse in einer perspektivischen Einzeldarstellung;
- Fig. 8: den, das Schalldämpfungselement bildenden Schaumstoffgrundkörper in einer Einzeldarstellung.

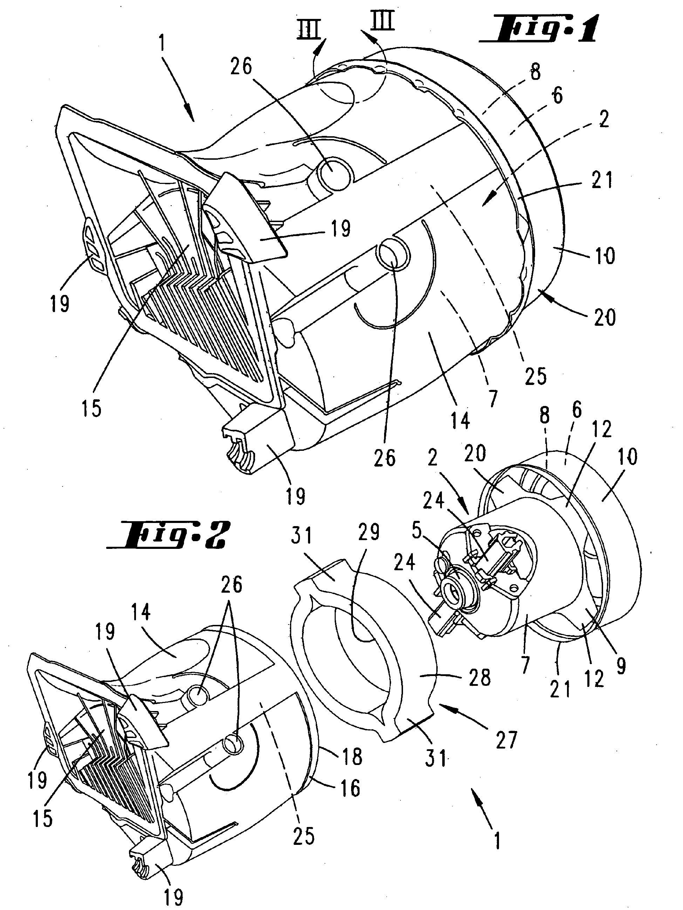

Dargestellt und beschrieben ist zunächst mit Bezug zu den Fig. 1 und 2 eine Motor-Gebläse-Einheit 1. Eine solche Einheit findet bspw. Verwendung in einem Staubsauger.

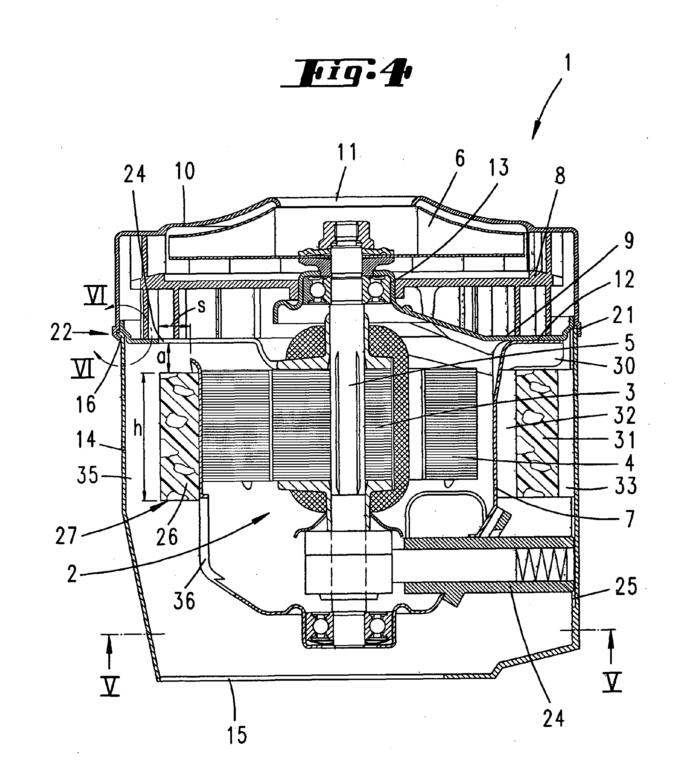

Diese Motor-Gebläse-Einheit 1 setzt sich, wie bspw. aus der Schnittdarstellung in Fig. 4 zu erkennen, im Wesentlichen aus einem schnelllaufenden Elektromotor 2 mit einem Rotor 3 und einem Stator 4 und einem auf einer Motorwelle 5 befestigten Ventilator 6 zusammen, wobei der Rotor 3 und der Stator 4 in einem Motorgehäuse 7 aufgenommen sind. Der Ventilator 6 und ein diesem zugeordneter Diffusor 8, welch letzterer drehfest auf einer Lagerbrücke 9 des Elektromotors 2 befestigt ist, sind von einem Gebläsetopf 10 überdeckt. Dieser Gebläsetopf 10 besitzt im Bereich seines Topfbodens eine zentrale Ansaugöffnung 11.

Die Anordnung ist hierbei so gewählt, dass der Gebläsetopf 10 sich mit seinem Topfboden in Axialrichtung auf dem Diffusor 8 abstützt, wobei die Gebläsetopfwandung sich in axialer Richtung etwa bis auf Höhe der Lagerbrücke 9 erstreckt.

Der Elektromotor 2 ist zum einen in dem Motorgehäuse 7 und zum anderen im Bereich der Lagerbrücke 9 in Motorwellenkugellagern in den Endbereichen seiner Motorwelle 5 gelagert. An dem dem Motorgehäuse 7 abgewandten Endbereich ist der Ventilator 6 drehfest mit der Motorwelle 5 verbunden.

Die beschriebene Anordnung von Elektromotor 2, sowie Ventilator 6 und Diffusor 8 ist bspw. aus der DE 196 06 146 A1 bekannt. Der Inhalt dieser Patentanmeldung wird hiermit vollinhaltlich in die Offenbarung vorliegender Erfindung mit einbezogen, auch zu dem Zwecke, Merkmale dieser Patentanmeldung in Ansprüche vorliegender Erfindung mit einzubeziehen.

Die Lagerbrücke 9, deren Außendurchmesser angepasst ist an den Innendurchmesser des Gebläsetopfes 10, weist im Grundriss einen geschlossenen Ringbereich und vier von diesem radial nach Innen weisende Brückenstege 12 zur Halterung der mittig ausgeformten Lagerstelle 13 auf. Die Brückenstege 12 und die Lagerstelle 13 teilen den durch den äußeren Ringbereich begrenzten Innenraum in mehrere Luftdurchtrittsbereiche, deren Grundrissfläche so groß gewählt ist, dass die durch diese Bereiche strömende Luft teilweise in den Motorraum, d. h. ins Innere des Motorgehäuses 7 an Rotor 3 und Stator 4 vorbeigeführt, strömt und teilweise außerhalb an dem Motorgehäuse 7 entlanggeführt wird.

Um diesen äußeren Luftstrom zielgerichtet und verlustfrei einem gegebenenfalls nachgeschalteten Feinstfilter zuzuführen, ist der Elektromotor 2, bzw. das Motorgehäuse 7 von einem Motoraußengehäuse 14 umgeben, welches topfartig ausgeformt ist und im Bereich des Topfbodens, welcher dem Ventilator 6 abgewandt ist, eine Ausströmöffnung 15 besitzt.

Der Durchmesser des im Wesentlichen im Querschnitt kreisrunden Motoraußengehäuses 14 entspricht maximal dem Topfdurchmesser des Gebläsetopfes 10. In der dargestellten Ausführungsform ist gegenüber dem Gebläsetopf ein verringerter Durchmesser des Motoraußengehäuses 14 gewählt.

Die Gehäusewandung des Motoraußengehäuses 14 weist in ihrem, der Lagerbrücke 9 zuordbaren Endbereich einen radial nach außen sich erweiternden Verbindungsrand 16 auf, mittels welchem das Motoraußengehäuse 14 auf einer radial außen ausgeformten Stufe 17 der Lagerbrücke 9 aufsitzt.

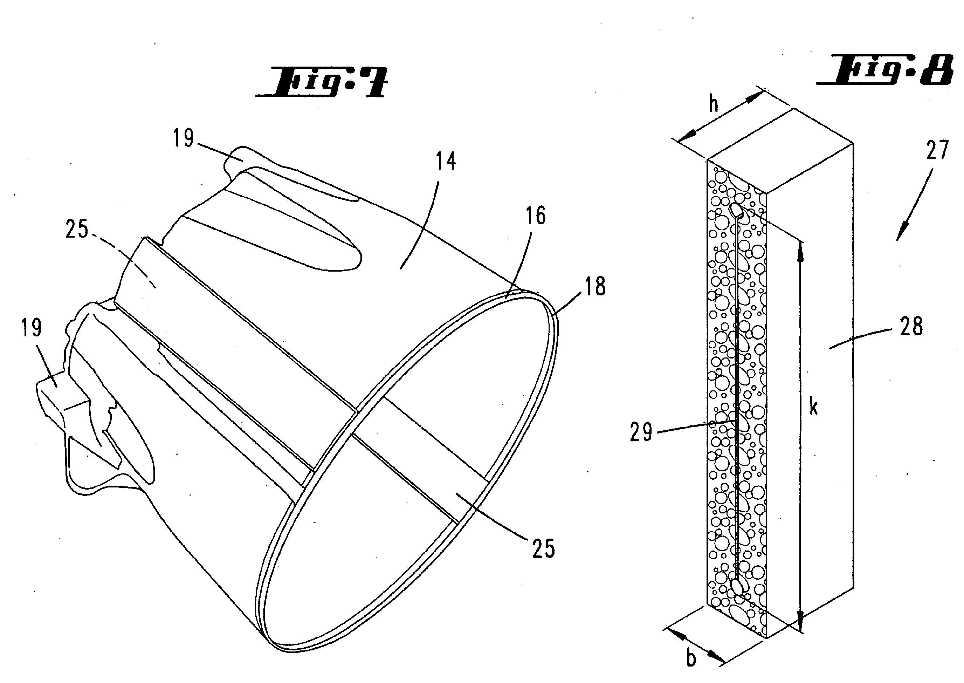

Das bevorzugt im Kunststoff-Spritzverfahren hergestellte Motoraußengehäuse 14 ist des Weiteren stirnseitig des Verbindungsrandes 16 mit einer angespritzten, umlaufenden Weich-Dichtlippe 18 versehen. Darüber hinaus können im Zuge dieses Anspritzens der Dichtlippe 18 auch weitere Dichtungen oder Lagerblöcke 19 an dem Motoraußengehäuse 14 angeordnet werden (vgl. Fig. 7).

Mit der Dichtlippe 18 tritt der Verbindungsrand 16 des Motoraußengehäuses 14 gegen eine sich radial nach außen erweiternde Anlagestufe 20 des Gebläsetopfes 10, von welcher Anlagestufe 20 ein sich über den Verbindungsrand 16 hinweg erstreckender Kragen 21 ausgeht. Dieser ist über den gesamten Umfang mehrfach partiell deformiert, so dass eine formschlüssige Verbindung mit dem Verbindungsrand 16 des Motoraußengehäuses 14 erreicht ist, welche Verbindung eine Rückfederung der eingespannten Dichtung verhindert.

Der durch die Deformation hervorgerufene Umgriff um den Verbindungsrand 16 kann durch Rollen oder partielle Crimpung durchgeführt sein. Die Verbindung ist nicht zerstörungsfrei trennbar.

Der so gebildete Umfangs-Verbindungsbereich 22 ist auf Höhe der Lagerbrücke 9 platziert, so dass die bei der Deformation hervorgerufenen Radialkräfte im Inneren des Motoraußengehäuses 14 von der Lagerbrücke 9 bzw. einer Schulter 23 derselben aufgenommen werden können.

Durch die erfindungsgemäße Ausgestaltung und Befestigung des Motoraußengehäuses 14 ist eine hygienedichte Kapselung des Elektromotors 2 gegeben. Diese Kapselung garantiert eine dauerhafte Luftdichtigkeit und ist darüber hinaus temperaturfest und mechanisch belastbar.

Des Weiteren ist durch die gewählte Anordnung der Gebläsetopf 10 sowie das Motoraußengehäuse 14 fest an dem Elektromotor 2 angeordnet, dies durch Einspannen des auf der Lagerbrücke 9 befestigten Diffusors 8 zwischen dem Gebläsetopfboden und dem Verbindungsrand 16 des Motoraußengehäuses 14, womit zunächst eine axiale Sicherung des gekapselten Elektromotors 2 erreicht ist. Eine radiale Fixierung ist dadurch erreicht, dass die Kohlebürsten-Köcher 24 in entsprechend ausgeformten, axial verlaufenden, nutartigen Aufnahmen 25 im Bereich der Motoraußengehäuse-Wandung eingreifen.

Einer relativen Motorenbewegung in dem kapselartigen Motoraußengehäuse 14 ist demzufolge entgegengewirkt, so dass eine direkte Elektrokontaktierung des Elektromotors 2 von außen durch entsprechend angeordnete Öffnungen 26 des Motoraußengehäuses 14 erfolgen kann.

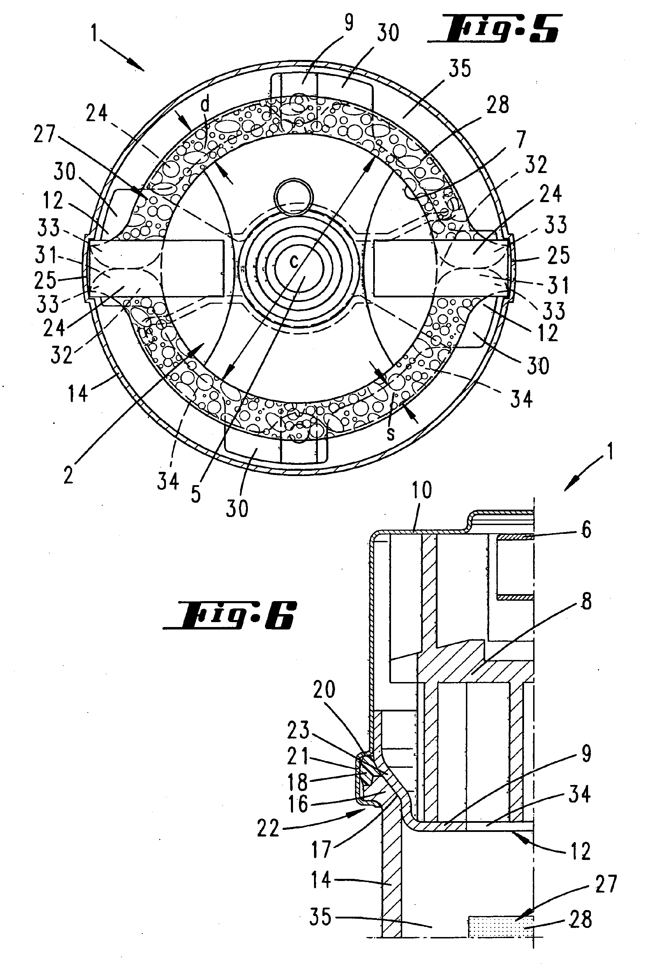

Um eine einfache und darüber hinaus platzsparende Schalldämpfung anzubieten, ist zwischen dem Motorgehäuse 7 und dem Motoraußengehäuse 14 ein Schalldämpfungselement 27 angeordnet. Dieses ist bevorzugt ein einteiliges Schaumstoffteil 28, welches im Einbauzustand gemäß den Fig. 4 und 5 als geschlossener Ring auf der Mantelaußenfläche des Motorgehäuses 7 angeordnet ist.

Bevorzugt besteht hierbei das Schaumstoffteil 28 aus einem quaderförmigen, luftdurchlässigen und elastischen Grundkörper, der in der Längsrichtung geschnitten ist (vgl. Fig. 8). Um ein Weiterreißen des Längsschlitzes 29 zu unterbinden, sind die Schnittenden verrundet.

Dieser, wie in Fig. 8 dargestellte Grundkörper wird zur Montage zu einem ringförmigen Element deformiert und über das Motorgehäuse 7 gestülpt, wonach das Schalldämpfungselement 27 unter der Materialverspannung fest auf dem Motorgehäuse 7 sitzt. Einem Abrutschen des Schaumstoffteiles 28 vom Motorgehäuse 7 ist in axialer Richtung einerseits durch die Lagerbrücke 9 und andererseits durch die Köcher 24 verhindert.

Das Schalldämpfungselement 27 ist mit einem Axialabstand a zu dem Diffusor 8 bzw. der Lagerbrücke 9 positioniert, wobei dieser Axialabstand a durch Abstützung des Schaumstoffteiles 28 auf von der Lagerbrücke 9 in Axialrichtung abstehenden Schaufelelementen 30 erreicht ist (vgl. Fig. 4).

Durch die erwähnte Deformation des Schaumstoffteil-Grundkörpers in ein ringförmiges Element ergeben sich gegenüberliegende, vertikal verlaufende Stege 31 (vgl. Fig. 5). Im Bereich dieser Stege 31 bilden sich dämpfungselementinnenseitig Zwickel 32 aus, so dass hier das Schaumstoffteil 28 mit radialem Abstand zum Motorgehäuse 7 verläuft. Die nach außen weisenden, in Axialrichtung verlaufenden Randabschnitte 33 der Stege 31 sind voneinander abgewandt ausgespitzt. Mit diesen Randabschnitten 33 greift das Schaumstoffteil 28 in die bereits erwähnten, in Axialrichtung verlaufenden, nutartigen Aufnahmen 25 des Motoraußengehäuses 14 ein, so dass hierdurch noch eine weitere Lagesicherung des Schaumstoffteiles 28 in Umfangsrichtung erreicht ist.

Die in radialer Richtung gemessene Dicke d des Schaumstoffteiles 28 entspricht etwa dem halben radialen Abstand zwischen Motorgehäuse 7 und Motoraußengehäuse 14, wobei außerhalb der Stegbereiche das Schaumstoffteil 28 mit radialem Abstand zum Motoraußengehäuse 14 verläuft (vgl. Fig. 5).

Des Weiteren ist die Anordnung so gewählt, dass die sich gegenüberliegenden Stege 31 umfangsmäßig in Überdeckung zu den Brückenstegen 12 der Lagerbrücke 9 angeordnet sind.

Die in axialer Richtung gemessene Höhe h des Schaumstoffteiles 28 ist so bemessen, dass sich Letzteres auf den Schaufelelementen 30 abstützend sich bis zu einer ersten Randkante einer Motorgehäuse-Entlüftungsöffnung 36 erstreckt. So ist der ungehinderte Austritt der durch das Motorgehäuse 7 geführten Kühlluft durch die Entlüftungsöffnung 36 gewährleistet. Darüber hinaus entspricht die Gesamtdicke b des Schalldämpfungs-Grundkörpers gemäß Fig. 8 etwa dem 2,2 bis 3,5-fachen der radial gemessenen Spaltgröße s des Ringspaltes 24. Das Verhältnis der Länge k des Längsschlitzes 29 zum Außendurchmesser c des Motorgehäuses beträgt etwa 1,3 bis 1,7.

Die drallbehaftete Luft, die aus dem Ringspalt 34 des Gebläses entweicht, wird durch die Stege 31 des Schalldämpfungselementes 27 zum größten Teil in Achsrichtung umgelenkt. In Verbindung mit dem, im Wesentlichen zylindrischen Motoraußengehäuse 14 ergibt sich eine Zweikammerströmung, deren dominante Komponente achsparallel ist. Da das Schalldämpfungselement 27 luftdurchlässig ist, entstehen auf den strömungsabgewandten Seiten der Schalldämpfungsstege 31 keine strömungstechnischen Toträume, die den Strömungsverlust ansonsten negativ beeinflussen würden.

Durch dieses Schalldämpfungselement 27 wird erreicht, dass der aus dem ringförmigen Spalt 34 austretende Schall nicht direkt durchstrahlen kann, da das Schaumstoffteil 28 eine Barriere bildet, was unter anderem eine Reflektion des Schalls zur Folge hat. Weitere Geräuschanteile, die an der Stirnfläche nicht reflektiert werden, können im Material gedämpft werden.

Die durch den Ringraum 35 zwischen dem Schaumstoffteil 28 und dem Motoraußengehäuse 14 strömende Luft wird hoch wirksam an der Mantelfläche des Schalldämpfungselementes 27 bedämpft.

Da das Schalldämpfungselement 27 luftdurchlässig ist und somit ein konvektiver Wärmeaustausch der durch dieses Element bedeckten Motorflächen gewährleistet ist, ist die Kühlung des Elektromotors 2 nicht beeinträchtigt.

## Patentansprüche

1. Schnelllaufender Elektromotor (2), bspw. für ein Haushaltsgerät, insbesondere für einen Staubsauger, mit einem, eine Motorwelle (5) aufweisenden Rotor (3) und einem Stator (4), wobei an der Motorwelle (5) ein Ventilator (6) angeflanscht ist, zur Kühlung des Motors (2) und bei Einsatz des Elektromotors (2) in einem Staubsauger zur Erzeugung der Saugleistung, wobei weiter der Rotor (3) und der Stator (4) in einem Motorgehäuse (7) aufgenommen sind und wobei das Motorgehäuse (7) einen Gebläsetopf (10) und ein mit radialem Abstand zu dem Motorgehäuse (7) verlaufendes Motoraußengehäuse (14) aufweist, wobei weiter der Gebläsetopf (10) mit dem Motoraußengehäuse (14) verbunden ist und wobei der Gebläsetopf (10) und das Motoraußengehäuse (14) hierdurch fest an dem Elektromotor (2) angeordnet sind, wobei in radialer Richtung zwischen dem Motorgehäuse (7) und dem Motoraußengehäuse (14) ein Schaumstoff-Schalldämpfungselement (27) angeordnet ist, **dadurch gekennzeichnet, dass** das Schaumstoffteil (28) als geschlossener Ring ausgebildet ist, der gegenüberliegende, vertikal verlaufende Stege (31) aufweist.

2. Elektromotor nach Anspruch 1, **dadurch gekennzeichnet, dass** das Schaumstoffteil (28) im Bereich der Stege (31) mit radialem Abstand zum Motorgehäuse (7) verläuft.

3. Elektromotor nach einem der Ansprüche 1 oder 2, **dadurch gekennzeichnet, dass** das Schaumstoffteil außerhalb der Stegbereiche mit radialem Abstand zum Motoraußengehäuse (14) verläuft.

4. Elektromotor nach einem der Ansprüche 1 bis 3, **dadurch gekennzeichnet, dass** die Stege (31) umfangsmäßig in Überdeckung zu Brückenstegen (12) einer Lagerbrücke (9) angeordnet sind.

5. Elektromotor nach Anspruch 4, **dadurch gekennzeichnet, dass** von der Lagerbrücke in Axialrichtung abstehende Schaufelelemente (30) ausgehen, welche dem darauf aufliegenden Schaumstoffteil (28) einen Axialabstand (a) zu einem Diffusorteil des Motors vorgeben.

6. Elektromotor nach Anspruch 1, **dadurch gekennzeichnet, dass** der Gebläsetopf (10) und/oder das Motoraußengehäuse (14) plastisch verformbar sind und dass die Verbindung der Teile untereinander durch plastische Verformung eines der Teile erreicht ist.

7. Elektromotor nach Anspruch 6, **dadurch gekennzeichnet, dass** der Gebläsetopf (10) und das Motoraußengehäuse (14) gegeneinander formschlussgesichert sind.

8. Elektromotor nach einem der Ansprüche 6 oder 7, **dadurch gekennzeichnet, dass** die Teile in einem Umfangs-Verbindungsbereich (22) einander übergreifen und dass das übergreifende Teil im Hintergriffabschnitt zu dem übergriffenen Teil plastisch verformt ist.

9. Elektromotor nach Anspruch 8, **dadurch gekennzeichnet, dass** in dem Verbindungsbereich (22) der Teile eine umlaufende Weich-Dichtlippe (18) ausgeformt ist.

10. Elektromotor nach Anspruch 9, **dadurch gekennzeichnet, dass** die Dichtlippe (18) an eines der Teile angespritzt ist.

11. Elektromotor nach einem der Ansprüche 8 bis 10, **dadurch gekennzeichnet, dass** das hintergriffene Teil mit einem, gegebenenfalls durch die Dichtlippe (18) gebildeten Verbindungsrand (16) auf einer Anlagestufe (20) des umgreifenden Teils aufliegt.

12. Elektromotor nach einem der Ansprüche 6 bis 11, **dadurch gekennzeichnet, dass** der Gebläsetopf (10) axial auf einem Diffusor (8) abgestützt ist.

13. Elektromotor nach einem der Ansprüche 6 bis 12, **dadurch gekennzeichnet, dass** das Motoraußengehäuse (14) an einer Lagerbrücke (9) abgestützt ist.

14. Elektromotor nach Anspruch 13, **dadurch gekennzeichnet, dass** die Abstützung des Motoraußengehäuses (14) an der Lagerbrücke (9) im Verbindungsbereich (22) von Gebläsetopf (10) und Motoraußengehäuse (14) vorgenommen ist.

## Claims

1. High-speed electric motor (2), for example for a domestic appliance, in particular for a vacuum cleaner, comprising a rotor (3) with a motor shaft (5), and a stator (4), a fan (6) being flanged onto the motor shaft (5) for cooling the motor (2) and for producing the suction when the electric motor (2) is used in a vacuum cleaner, the rotor (3) and the stator (4) furthermore being received in a motor housing (7), and the motor housing (7) comprising a fan end cover (10) and an outer motor housing (14) which extends at a radial distance from the motor housing (7), the fan end cover (10) further being connected to the outer motor housing (14), and the fan end cover (10) and the outer motor housing (14) thus being arranged rigidly on the Electric motor (2), a foam sound insulation element (27) being arranged between the motor housing (7) and the outer motor housing (14) in the radial direction, **characterised in that** the foam component (28) is constructed as a closed ring which comprises opposite, vertically extending webs (31).

2. Electric motor according to claim 1, **characterised in that** the foam component (28) extends in the region of the webs (31) at a radial distance from the motor housing (7).

3. Electric motor according to either claim 1 or claim 2, **characterised in that** the foam component extends outside the web regions at a radial distance from the outer motor housing (14).

4. Electric motor according to any one of claims 1 to 3, **characterised in that** the webs (31) are arranged circumferentially so as to overlap bracket webs (12) of a bearing bracket (9).

5. Electric motor according to claim 4, **characterised in that** blade elements (30), projecting in the axial direction, extend outwards from the bearing bracket and provide the foam component (28) lying thereon with an axial distance (a) from the diffuser component of the motor.

6. Electric motor according to claim 1, **characterised in that** the fan end cover (10) and/or the outer motor housing (14) are plastically deformable and **in that** the connection between the components is achieved by plastic deformation of one of the components.

7. Electric motor according to claim 6, **characterised in that** the fan end cover (10) and the outer motor housing (14) are positively secured in relation to one another.

8. Electric motor according to either claim 6 or claim 7, **characterised in that** the components overlap one another in a circumferential connection region (22) and **in that** the overlapping component is plastically deformed towards the overlapped component in the rear engagement portion.

9. Electric motor according to claim 8, **characterised in that** a circumferential flexible sealing lip (18) is formed in the connection region (22) of the components.

10. Electric motor according to claim 9, **characterised in that** the sealing lip (18) is moulded integrally onto one of the components.

11. Electric motor according to any one of claims 8 to 10, **characterised in that** a connection rim (16), optionally formed by the sealing lip (18), of the component which is engaged from behind rests on a support step (20) of the surrounding component.

12. Electric motor according to any one of claims 6 to 11, **characterised in that** the fan end cover (10) is supported axially on a diffuser (8).

13. Electric motor according to any one of claims 6 to 12, **characterised in that** the outer motor housing (14) is supported on a bearing bracket (9).

14. Electric motor according to claim 13, **characterised in that** the support of the outer motor housing (14) on the bearing bracket (9) is undertaken in the connection region (22) of the fan end cover (10) and the outer motor housing (14).

## Revendications

1. Moteur électrique à régime élevé (2), par exemple pour un appareil électroménager, notamment pour un aspirateur, avec une rotor (3), présentant un arbre moteur (5), et un stator (4), dans lequel un ventilateur est fixé par bride à l'arbre moteur (5), pour le refroidissement du moteur (2) et lors de l'utilisation du moteur électrique (2) dans un aspirateur pour la production de l'aspiration, dans lequel, en outre, le rotor (3) et le stator (4) sont contenus dans un boîtier de moteur (7) et dans lequel le boîtier de moteur (7) présente un pot de ventilateur (10) et un bâti externe de moteur (14) s'étendant à une distance radiale du boîtier de moteur (7), dans lequel en outre le pot de ventilateur (10) est relié au bâti externe de moteur (14) et dans lequel le pot de ventilateur (10) et le bâti externe de moteur (14) sont ainsi fixés rigidement sur le moteur électrique (2), dans lequel un élément d'amortissement en matière alvéolaire (27) est agencé en direction radiale entre le boîtier de moteur (7) et le bâti externe de moteur (14), **caractérisé en ce que** la partie en matière alvéolaire (28) est formée comme un anneau fermé, l'anneau comportant des traverses (31) s'étendant de manière verticale et opposée.

2. Moteur électrique selon la revendication 1, **caractérisé en ce que** la partie en matière alvéolaire (28) s'étend dans la zone des traverses (31) à une distance radiale par rapport au boîtier de moteur (7)

3. Moteur électrique selon l'une des revendications 1 ou 2, **caractérisé en ce que** la partie en matière alvéolaire (28) s'étend à l'extérieur de la zone des traverses à une distance radiale par rapport au bâti externe de moteur (14).

4. Moteur électrique selon l'une des revendications 1 à 3, **caractérisé en ce que** les traverses (31) sont agencées de manière circonférentielle en chevauchement des passerelles (12) d'un pont d'appui (9).

5. Moteur électrique selon la revendication 4, **caractérisé en ce que** des éléments à aube (30) font saillie dans une direction axiale depuis le pont d'appui vers l'extérieur, lesquels imposent à la partie en matière alvéolaire (28) reposant sur le pont d'appui une distance axiale (a) par rapport à une partie de diffuseur du moteur.

6. Moteur électrique selon la revendication 1, **caractérisé en ce que** le pot de ventilateur (10) et/ou le bâti externe de moteur (14) sont déformables plastiquement et **en ce que** la liaison des composants l'un à l'autre est obtenue par la déformation plastique de l'un des composants.

7. Moteur électrique selon la revendication 6, **caractérisé en ce que** le pot de ventilateur (10) et le bâti externe de moteur (14) sont sécurisés l'un par rapport à l'autre par correspondance de forme.

8. Moteur électrique selon l'une des revendications 6 ou 7, les composants s'engagent l'un par dessus l'autre dans une zone de liaison (22) périphérique et en ce que la partie s'engageant par le dessus est déformée plastiquement dans la zone d'engagement arrière par rapport à la partie engagée par le dessus.

9. Moteur électrique selon la revendication 8, **caractérisé en ce que** dans la zone de liaison (22) des composants, une lèvre d'étanchéité molle périphérique (18) est formée.

10. Moteur électrique selon la revendication 9, **caractérisé en ce que** la lèvre d'étanchéité (18) est injectée sur l'une des parties.

11. Moteur électrique selon l'une des revendications 8 à 10, **caractérisé en ce que** la partie qui est engagée par l'arrière repose au moyen d'un bord de liaison (16) le cas échéant constitué par la lèvre d'étanchéité (18), sur une marche d'appui (20) de la partie qui s'engage autour.

12. Moteur électrique selon l'une des revendications 6 à 11, **caractérisé en ce que** le pot de ventilateur (10) est supporté axialement sur un diffuseur (8).

13. Moteur électrique selon l'une des revendications 6 à 12, **caractérisé en ce que** le bâti externe de moteur (14) est supporté contre un pont d'appui (9).

14. Moteur électrique selon la revendication 13, **caractérisé en ce que** le support du bâti externe de moteur (14) est réalisé contre le pont d'appui (9) dans la zone de liaison (22) du pot de ventilateur (10) et du bâti externe de moteur (14).
